# FASCICULE DE BREVET EUROPEEN

(11) **EP 0 323 935 B1**
(45) Date de publication et mention de la délivrance du brevet: **14.04.1993**
(21) Numéro de dépôt: 89420001.3
(22) Date de dépôt: 02.01.1989
(51) Int. Cl.: H04N 5/12, H04N 5/05

(54) **Circuit de reconnaissance d'un signal de magnétoscope**
Schaltung zur Erkennung eines Videorecordersignals
Circuit for recognizing a video recorder signal

(30) Priorité: 04.01.1988 FR 8800168
(43) Date de publication de la demande: 12.07.1989
(73) Titulaire: SGS-THOMSON MICROELECTRONICS S.A., 94250 Gentilly (FR)
(72) Inventeur: Imbert, Michel, F-38180 Seyssins (FR); Merval, Jean-Marc, F-38120 Saint Egreve (FR)
(74) Mandataire: de Beaumont, Michel

(56) Documents cités:
- EP-A- 0 033 818
- DE-A- 2 826 725
- FR-A- 2 116 415
- US-A- 3 909 735

## Description

La présente invention concerne le domaine des téléviseurs, et plus particulièrement des téléviseurs multifonction munis, en plus de la prise d'antenne, d'une prise de péritélévision.

Les téléviseurs ont d'abord été conçus essentiellement pour recevoir des signaux captés par une antenne aérienne. Ensuite, avec l'invention des magnétoscopes, ces téléviseurs ont dû être adaptés à recevoir des signaux d'image enregistrés sur bande magnétique. Une autre évolution a consisté à utiliser les téléviseurs non plus seulement pour recevoir et afficher des signaux de télévision mais pour servir généralement de terminal d'ordinateur, et même éventuellement pour superposer des images d'ordinateurs à des images de télévision. Ainsi, la prise de péritélévision, initialement prévue pour une seule connexion à un magnétoscope peut par exemple servir à une connexion vers un microordinateur, un dispositif de jeux vidéo, une antenne de réception par satellite, des réseaux de circuits câblés, etc.

Le traitement de ces divers signaux par le téléviseur nécessite généralement que certains au moins de ses circuits internes soient modifiés. On a donc été amené à prévoir des systèmes de commutation manuelle pour configurer le téléviseur de façon satisfaisante en fonction du dispositif auquel la prise de péritélévision (ou dans certains cas la prise d'antenne) est connectée alors que, initialement, le seul fait de brancher la prise de péritélévision indiquait qu'un magnétoscope était connecté.

L'object de la présence invention est de prévoir un circuit permettant de reconnaître automatiquement que le téléviseur reçoit un signal de magnétoscope et non pas un autre type de signal, et de fournir en conséquence les signaux de commutation nécessaires pour configurer le téléviseur de façon appropriée.

Le document DE-A-2826725 décrit un système de détection de désynchronisation et de resynchronisation d'une boucle de phase conforme aux caractéristiques du préambule de la revendication 1.

La présente invention va être présentée de façon plus détaillée dans le cas où l'on cherche à reconnaître le signal de magnétoscope pour communiquer automatiquement la constante de temps de la boucle à verrouillage de phase servant à régénérer les signaux de synchronisation lignes à l'intérieur du téléviseur mais il sera clair que cette détection peut être utilisée pour commuter d'autres fonctions à l'intérieur du téléviseur.

Pour atteindre cet objet, la présente invention prévoit un circuit de reconnaissance de l'arrivée d'un signal de magnétoscope sur une entrée de téléviseur reliée à un circuit séparateur de signal de synchronisation de ligne, lui-même relié à un boucle de verrouillage de phase (PLL), comprenant un premier comparateur de phase et un oscillateur à fréquence commandée par une tension (VCO), destinée à régénérer à l'intérieur du téléviseur le signal de synchronisation, cette boucle à verrouillage de phase présentant une première constante de temps longue correspondant à un fonctionnement sur un signal d'antenne, et comprenant en outre des moyens de commutation de la PLL sur une deuxième constante de temps courte devant la première, un deuxième comparateur de phase pour comparer les phases d'entrée et de sortie du premier comparateur de phase, ce deuxième comparateur de phase ayant une troisième constante de temps courte devant la première et la deuxième, et un comparateur à seuil fournissant un signal de commande quand la sortie du deuxième comparateur de phase se trouve en dehors d'une plage déterminée, ce signal de commande agissant sur lesdits moyens de commutation.

Le deuxième comparateur de phase peut avoir sa constante de temps remplacée par une quatrième constante de temps courte devant les première, deuxième et troisième constantes de temps, et dans le même rapport par rapport à la troisième constante de temps que la deuxième constante devant la première constante de temps, cette quatrième constante de temps étant commutée sur le deuxième comparateur de phase par lesdits moyens de commutation en même temps que la deuxième constante de temps sur la PLL.

Selon un mode de réalisation de l'invention, il est prévu en outre un détecteur du bruit HF (300 kHz - 1MHZ) dans le signal video reçu par le téléviseur pendant la durée des signaux de synchronisation ligne, et des moyens pour régler les limites du comparateur à seuil en fonction du niveau du bruit.

Selon un mode de réalisation de l'invention, il est prévu en outre un comparateur pour comparer le signal de bruit à une tension de référence et inhiber l'action du signal de commande quand le signal de bruit dépasse le seuil de référence.

Selon un mode de réalisation de l'invention, il est prévu en outre un interrupteur manuel pour forcer l'entrée du comparateur à seuil en dehors des limites prédéterminées et provoquer manuellement la commutation du PLL sur la deuxième constance de temps.

Selon un mode de réalisation de l'invention, il est prévu en outre des moyens pour forcer les moyens de commutation vers la deuxième constante de temps lors de la première détection d'un signal vidéo, d'où il résulte que la durée d'accrochage de la boucle à verrouillage de phase sur la fréquence de synchronisation est plus rapide.

Selon un mode de réalisation de l'invention, le signal de commande est transmis aux moyens de commutation par l'intermédiaire d'une bascule RS et d'un compteur de p trames, d'où il résulte que les moyens de commutation peuvent être actionnés seulement p trames après que le signal de commande a cessé d'être fourni, p étant un entier compris entre 2 et 10.

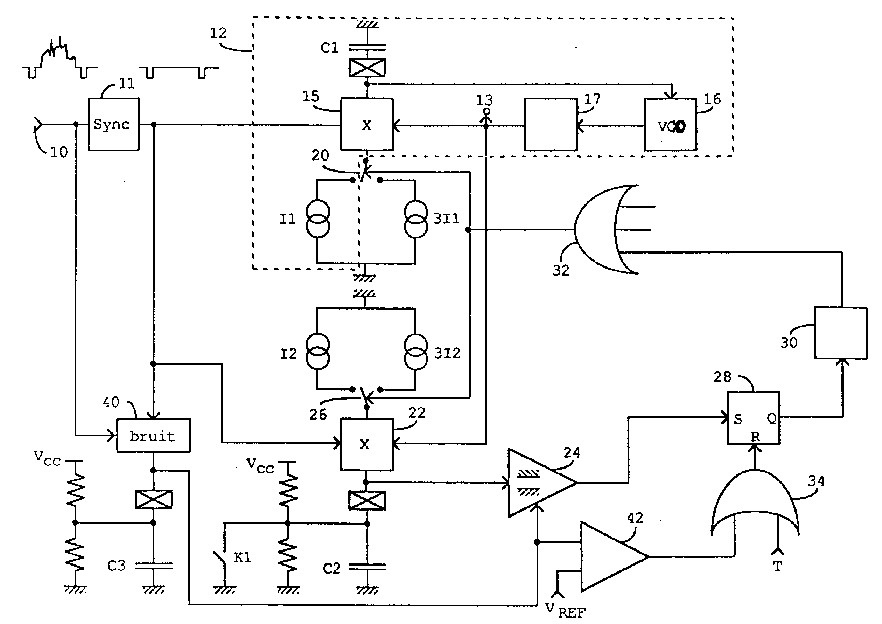

Ces objets, caractéristiques et avantages ainsi que d'autres de la présente invention seront exposés plus en détail dans la description suivante d'un mode de réalisation particulier faite en relation avec la figure jointe qui représente sous forme de blocs un circuit selon l'invention.

Le signal reçu par le téléviseur, après une première démodulation, arrive sur la borne d'entrée 10 d'un circuit séparateur de synchronisation 11. On a représenté au-dessus de l'entrée 10 du séparateur de synchronisation 11 l'allure classique d'un signal de télévision entre deux tops de synchronisation ligne. On a représenté au-dessus de la sortie du séparateur de synchronisation 11 les impulsions de synchronisation isolées du reste du signal vidéo.

Ce signal de synchronisation ligne est envoyé classiquement à une boucle de verrouillage de phase 12 destinée à régénérer sur une borne 13 un signal de synchronisation interne, en phase avec le signal de synchronisation reçu mais en en éliminant le bruit, et en permettant de continuer à fournir un signal de synchronisation interne même si le signal de synchronisation reçu est momentanément interrompu. La boucle à verrouillage de phase comprend classiquement un comparateur de phase 15 et un oscillateur à fréquence commandée par la tension (VCO) 16. Classiquement, ce VCO oscille à une fréquence qui est un multiple entier de la fréquence du signal de synchronisation de ligne, par exemple 32 fois cette fréquence. Le VCO 16 est donc suivi d'un diviseur 17, ici un diviseur par 32. Le comparateur de phase 15 reçoit sur sa première entrée le signal de sortie du séparateur de synchronisation 11 et sur sa deuxième entrée la sortie du diviseur 17. C'est sur cette deuxième entrée qu'est recueilli le signal de synchronisation interne sur la borne 13. D'autre part, à ce PLL est associée une constante de temps obtenue par un condensateur C1 dans lequel est injecté un courant en provenance d'une source de courant I1 (la constante de temps est associée au temps de charge du condensateur, c'est-à-dire que, quand l'intensité de la source de courant augmente, ce temps de charge diminue et la constante de temps diminue). Dans un PLL classique de téléviseur, la constante de temps a une valeur correspondant, par exemple, à la durée de 20 lignes. Dans un cas pratique où la fréquence de ligne est de 15625 kilohertz, la durée de balayage d'une ligne est de 64 microsecondes, ce qui correspond à une constante de temps de 1,280 ms. Le choix d'une telle constante de temps donne des résultats satisfaisants pour le traitement d'un signal de télévision essentiellement affligé de bruit haute fréquence et éventuellement d'absence de quelques tops de synchronisation.

Ce qui vient d'être décrit correspond à l'état existant de circuits classiques et est bien connu de l'homme de l'art.

Dans le cas où le signaux reçus sur la prise 10 sont des signaux en provenance d'un magnétoscope et non plus des signaux résultants d'une émission directe de télévision, le bruit affectant ces signaux et notamment les tops de synchronisation ligne n'est plus de même nature. Les signaux d'un magnétoscope présentent en général une fluctuation de la fréquence ligne à basse fréquence, correspondant à des glissements mécaniques de la bande magnétique et à des variations de vitesse moteur. Ainsi, la fréquence fluctue dans une plage qui est couramment comprise entre 10 et 300 hertz. Par contre, il se présente très peu de bruit haute fréquence dans le signal d'un magnétoscope.

Si l'on maintient pour le PLL la constante de temps élevée indiquée précédemment, ces fluctuations basse fréquence seront intégrées et le PLL fournira une fréquence fixe moyenne sans suivre ces fluctuations. Il en résultera une déformation de l'image de télévision dite effet de drapeau, à savoir qu'une verticale apparaîtra comme une ligne ondulée, ce qui est particulièrement désagréable pour le téléspectateur.

Pour remédier à cet inconvénient, on a proposé de commuter la constante de temps du PLL vers une constante de temps plus courte quand on est en présence d'un signal de magnétoscope. Ceci peut être réalisé en prévoyant un commutateur 20 reliant une source de courant d'une valeur plus élevée au condensateur C1. Dans l'exemple représenté, cette source de courant est une source de courant 3I1 de valeur triple de celle de la source de courant I1, c'est-à-dire que la constante de temps sera trois fois plus faible et que le PLL pourra suivre les fluctuations à basse fréquence. Dans l'art antérieur, ce commutateur était actionné manuellement, ou un PLL particulier était prévu dans le cas d'une détection de signal de magnétoscope.

La présente invention prévoit des moyens de reconnaissance automatique d'un signal de magnétoscope sur la borne 10 pour actionner automatiquement le commutateur 20. En outre, le signal de reconnaissance d'un branchement à un magnétoscope pourra être utilisé pour modifier d'autres fonctions souhaitées d'un téléviseur.

Selon la présente invention, pour reconnaître qu'un signal de magnétoscope est présent sur la borne 10, on propose de détecter la présence d'oscillations à basse fréquence dans le signal de synchronisation. Dans ce but, la présente invention prévoit de disposer un comparateur de phase 22 pour comparer le signal de sortie du séparateur de synchronisation 11 et le signal de sortie du PLL 12. Ce comparateur aura une constante de temps nettement plus courte que celle du PLL de façon à détecter les fluctuations à basse fréquence susmentionnées. La constante de temps du comparateur 22 est déterminée par un condensateur C2 alimenté par une source de courant I2. La sortie du comparateur de phase 22 est connectée à un comparateur à seuil 24 qui fournit un signal à bas niveau tant que le signal de sortie du comparateur de phase 22 se trouve entre des limites déterminées, c'est-à-dire en fait qu'il n'apparaît que du bruit haute fréquence dans le signal de synchronisation ligne, et qui fournit un signal à haut niveau quand le comparateur à seuil 24 indique que la sortie du comparateur de phase dépasse les limites prédéterminées, c'est-à-dire qu'il apparaît du bruit basse fréquence correspondant au type de bruit d'un signal de synchronisation de magnétoscope. La sortie du comparateur à seuil 24 commande la commutation du commutateur 20. Elle commande simultanément la commutation d'un autre commutateur 26 destiné à réduire encore la constante de temps du comparateur de phase 22, en prévoyant une source de courant plus élevée que la source de courant I2 pour charger le condensateur C2. Dans l'exemple représenté, cette deuxième source de courant est une source de courant 3I2 de valeur triple. En effet, il convient, quant le PLL commence à suivre les fluctuations basse fréquence du signal de magnétoscope, de détecter plus finement par le comparateur de phase 22 les fluctuations résiduelles de ce signal.

On a indiqué précédemment, que la constante de temps du comparateur de phase 22 devait être plus courte que celle du PLL 12. En pratique, si l'on a choisi pour le PLL 12 une constante de temps correspondant à la durée de 20 lignes de télévision, on pourra choisir pour le comparateur de phase 22 une constante de temps correspondant à celle de 5 lignes de télévision. Il existe ainsi un rapport 4 entre les constantes de temps du PLL 12 et du comparateur de phase 22, ce rapport étant maintenu quand les commutateurs 20 et 26 sont commutés.

D'autres aspects pratiques de réalisation de la présente invention vont maintenant être décrits.

Le signal de sortie du comparateur à seuil 24 n'est en pratique pas appliqué directement à la commande des commutateurs 20 et 26. La sortie du comparateur à seuil 24 est reliée à l'entrée de validation, entrée S, d'une bascule RS 28 dont la sortie Q est appliquée à un compteur de p trames 30 fournissant un signal à haut niveau pendant sa durée de comptage, c'est-à-dire qu'à partir du moment où le compteur a été mis en route, sa sortie fournit un signal à haut niveau pendant p trames de télévision même si son signal de commande a été interrompu. Dans un exemple de réalisation, p peut être égal à 4. La sortie du compteur 30 est transmise par l'intermédiaire d'une porte OU 32 aux circuits de commande, non représentés, des commutateurs 20 et 26. La bascule 28 comprend une borne de remise à zéro R qui reçoit la sortie d'une porte OU 34. Cette porte OU reçoit sur une première entrée un signal T de synchronisation de trame, qui est disponible dans un circuit de téléviseur pour remettre à zéro cette bascule lors de chaque trame, c'est-à-dire que si un nouveau signal n'est pas fourni sur l'entrée S de la bascule, le compteur de trames arrêtera de fournir un signal de sortie après quatre trames.

D'autre part, la présente invention prévoit d'utiliser un détecteur de bruit HF 40 recevant le signal sur la borne 10 et agissant pendant la durée du signal de synchronisation ligne comme cela est indiqué par la connexion de ce circuit de détection de bruit 40 à la sortie du circuit détecteur de synchronisation 11. Ce détecteur de bruit est classiquement relié à un circuit de constante de temps comprenant un condensateur C3 polarisé par une connexion au point milieu de deux résistances reliées entre la masse et une tension d'alimentation VCC. La sortie du détecteur de bruit est connectée d'une part à une entrée de commande du comparateur à seuil 24 pour élargir les limites de détection de ce comparateur à seuil quand le bruit augmente, d'autre part à la première entrée d'un comparateur 42 dont l'autre entrée reçoit une tension de référence pour détecter le moment où le bruit dépasse un seuil prédéterminé. En ce cas, la sortie du comparateur 42 est transmise par l'intermédiaire de la porte OU 34 à l'entrée R de la bascule 28 pour remettre celle-ci à zéro de façon permanente et inhiber l'action du circuit de détection de signal de magnétoscope comprenant essentiellement les comparateurs 22 et 24. En effet, si l'on détecte un bruit important pendant la durée des signaux de synchronisation de ligne, ceci signifie très vraisemblablement que l'on n'est pas en mode magnétoscope mais que l'on est, par exemple, en présence d'un signal de télévision transmis par voie aérienne et particulièrement bruité.

On notera en outre que le condensateur C2 est polarisé à une valeur de tension moyenne par une connexion au point milieu de deux résistances reliées entre la masse et une source d'alimentation VCC pour que le signal de sortie du comparateur de phase soit compatible avec l'utilisation d'un comparateur à seuil. D'autre part, un commutateur manuel K1 est disposé en parallèle avec le condensateur C2 pour le cas où l'on voudrait imposer la constante de temps courte pour la boucle PLL indépendamment de la reconnaissance automatique d'un signal de magnétoscope.

La porte OU 32 peut recevoir plusieurs autres entrées pour commander automatiquement la commutation du PLL sur une constante de temps plus courte, indépendamment de la reconnaissance d'un signal de magnétoscope. Ceci peut par exemple être le cas systématiquement pendant les deux premières trames après que des circuits, non représentés, ont détecté la première apparition d'un signal vidéo. Ceci permet de raccourcir initialement la constante de temps de la boucle PLL et donc d'accélérer son adaptation à la fréquence du signal de synchronisation. D'autres commandes pourraient être imaginées, par exemple une commande pendant quelques lignes à la fin de chaque retour trame.

Le circuit de reconnaissance de signal de magnétoscope a été décrit ici dans le cadre d'un mode de réalisation particulier, il est clair qu'il peut être sujet à de nombreuses variantes notamment en ce qui concerne les valeurs des constantes de temps et la réalisation pratique des circuits. En fait, d'autres circuits plus complexes seront également utilisés en relation avec le PLL mais ceci n'a pas été décrit car il s'agit de compléments bien connus de l'homme de l'art en matière de circuits de télévision.

## Revendications

1. Circuit de reconnaissance de l'arrivée d'un signal de magnétoscope sur une entrée d'un téléviseur reliée à un circuit séparateur de signal de synchronisation de ligne (11) lui-même relié à une boucle de verrouillage de phase (PLL) (12), comprenant un premier comparateur de phase (15) et un oscillateur à fréquence commandée par une tension (VCO) (16), destinée à régénérer à l'intérieur du téléviseur le signal de synchronisation, cette boucle à verrouillage de phase présentant une première constante de temps longue (I1, C1) correspondant à un fonctionnement sur un signal d'émission ou une deuxième constante de temps (3I1, C1) courte devant la première, ce circuit comprenant en outre:
un deuxième comparateur de phase (22) pour comparer les phases d'entrée du premier comparateur de phase, ce deuxième comparateur de phase ayant une troisième constante de temps (I2, C2) courte devant la première et la deuxième, et
un comparateur à seuil (24) fournissant un signal de commande quand la sortie du deuxième comparateur de phase se trouve en dehors d'une plage déterminée,
caractérisé en ce que le deuxième comparateur de phase (22) peut avoir sa constante de temps remplacée par une quatrième constante de temps (3I2, C2) courte devant les premières, deuxième et troisième constantes de temps, et dans le même rapport par rapport à la troisième constante de temps que la deuxième constante devant la première constante de temps, et en ce qu'il comprend des moyens de communation (20, 26) sensibles audit signal de commande pour commuter simultanément la PLL sur la première ou la deuxième constante de temps et le deuxième comparateur de phase sur respectivement la troisième ou la quatrième constante de temps.

2. Circuit de reconnaissance d'un signal de magnétoscope selon la revendication 1, caractérisé en ce qu'il comprend en outre :
un détecteur (40) du bruit HF existant dans le signal vidéo reçu par le téléviseur pendant la durée des signaux de synchronisation ligne, et
des moyens pour régler les limites définissant la plage du comparateur à seuil (24) en fonction du niveau de bruit.

3. Circuit de reconnaissance d'un signal de magnétoscope selon la revendication 2, caractérisé en ce qu'il comprend en outre un comparateur (42) pour comparer le signal de bruit à une tension de référence et inhiber l'action du signal de commande quand le signal de bruit dépasse le seuil de référence.

4. Circuit de reconnaissance d'un signal de magnétoscope selon l'une quelconque des revendications 1 à 3, caractérisé en ce qu'il comprend en outre un interrupteur manuel (K1) pour forcer l'entrée du comparateur à seuil (24) en dehors de ladite plage déterminée et provoquer manuellement la commutation de la PLL sur la deuxième constante de temps.

5. Circuit de reconnaissance d'un signal de magnétoscope selon l'une quelconque des revendications 1 à 4, caractérisé en ce qu'il comprend en outre des moyens pour former les moyens de commutation vers la deuxième constante de temps lors de la première détection d'un signal vidéo, d'où il résulte que la durée d'accrochage de la boucle à verrouillage de phase sur la fréquence de synchronisation est plus rapide.

6. Circuit de reconnaissance de l'arrivée d'un signal de magnétoscope selon l'une quelconque des revendications 1 à 5, caractérisé en ce que le signal de commande est transmis aux moyens de commutation (20) par l'intermédiaire d'une bascule RS (28) et d'un compteur de p trames (30), d'où il résulte que les moyens de commutation peuvent être actionnés seulement p trames après que le signal de commande a cessé d'être fourni, p étant un entier compris entre 2 et 10.

## Patentansprüche

1. Schaltung zum Erkennen des Eintreffens eines Videosignales eines Videorekorders an dem Eingang eines Fernsehers, der mit einer Trennschaltung (11) für das Zeilensynchronisationssignal und diese mit einer Phasenverriegelungsschaltung (PLL) (12) verbunden ist, welche einen ersten Phasenkomparator (15) und einen Oszillator mit spannungsgesteuerter Frequenz (VCO) (16) aufweist und zum Rückgewinnen des Synchronisationssignales innerhalb des Fernsehers dient, wobei diese Phasenverriegelungsschaltung eine erste Langzeitkonstante (I1, C1) entsprechend einer Funktion auf ein Sendesignal oder eine zweite Zeitkonstante (3I1, C1) aufweist, die in bezug zu der ersten kurz ist, wobei die Schaltung zusätzlich aufweist:
einen zweiten Phasenkomparator (22), um die Eingangsphasen des ersten Phasenkomparators zu vergleichen, wobei der zweite Phasenkomparator eine dritte Zeitkonstante (I2, C2) hat, die kurz in bezug auf die erste und zweite ist, und
einen Schwellenkomparator (24), der ein Steuersignal liefert, wenn der Ausgang des zweiten Phasenkomparators sich außerhalb eines bestimmten Bereiches befindet,
dadurch gekennzeichnet, daß die Zeitkonstante des zweiten Phasenkomparators (22) ersetzt werden kann durch eine vierte Zeitkonstante (3I2, C1), die kurz in bezug zu der ersten, zweiten und dritten Zeitkonstante ist und in gleicher Beziehung zu der dritten Zeitkonstante steht wie die zweite Zeitkonstante zur ersten Zeitkonstanten, und daß Schaltmittel (20, 26) vorgesehen sind, die auf das Steuersignal ansprechen, um simultan die PLL auf die erste oder zweite Zeitkonstante und den zweiten Phasenkomparator auf die dritte bzw. vierte Zeitkonstante umzuschalten.

2. Schaltung zum Erkennen eines Videorekordersignales nach Anspruch 1, dadurch gekennzeichnet, daß sie zusätzlich aufweist
einen Detektor (40) für das HF-Rauschen, das in dem vom Fernseher während der Dauer der Zeilensynchronisationssignale empfangenen Videosignal vorhanden ist, und
eine Einrichtung, um die Grenzen, die den Bereich des Schwellenkomparators definieren, als Funktion des Rauschpegels zu regeln.

3. Schaltung zum Erkennen eines Videorekordersignales nach Anspruch 2, dadurch gekennzeichnet, daß die Schaltung einen Komparator (42) aufweist, um das Rauschsignal mit einer Referenzspannung zu vergleichen und das Steuersignal zu unterdrücken, wenn das Rauschsignal die Referenzschwelle überschreitet.

4. Schaltung zum Erkennen eines Videorekordersignales nach einem der Anssprüche 1 bis 3, dadurch gekennzeichnet, daß die Schaltung ferner einen Handschalter (K1) aufweist, um den Eingang des Schwellenkomparators (24) außerhalb des erwähnten bestimmten Bereiches zu legen und manuell das Umschalten der PLL auf die zweite Zeitkonstante hervorzurufen.

5. Schaltung zum Erkennen eines Videorekordersignales nach einem der Anssprüche 1 bis 4, dadurch gekennzeichnet, daß die Schaltung ferner eine Einrichtung zum Einstellen der Schaltmittel auf die zweite Zeitkonstante beim ersten Erfassen eines Videosignales aufweist, wodurch die Dauer der Verriegelungszeit der Phasenverriegelung auf die Synchronisationsfrequenz schneller erfolgt.

6. Schaltung zum Erkennen des Eintreffens eines Videosignales eines Videorekorders nach einem der Ansprüche 1 bis 5, dadurch gekennzeichnet, daß das Steuersignal den Schaltmitteln (20) über ein RS-Flip-Flop (28) und einen p-Teilbildzähler (30) zugeführt wird, wodurch die Schaltmittel lediglich p Teilbilder nach Ende der Übertragung des Steuersignales betätigt werden können, wobei p eine ganze Zahl zwischen 2 und 10 ist.

## Claims

1. A circuit for detecting the arrival of a video tape recorder signal onto a TV input connected to a line synchronization signal separation circuit (11) in turn connected to a phase locked loop (PLL) (12), comprising a first phase comparator (15) and a voltage controlled oscillator (VCO) (16), designed for regenerating the synchronization signal inside the TV set, said phase locked loop having a first long time constant (I1, C1) corresponding to an aerial TV signal input, or a second time constant (3I1, C1) short with respect to the first one, this circuit further comprising:
a second phase comparator (22) for comparing the input phases of the first phase comparator, said second phase comparator having a third time constant (I2, C2) short with respect to the first and second ones, and
a threshold comparator (24) supplying a control signal when the output of the second phase comparator is outside a pre-determined range,
characterized in this that the second phase comparator (22) may have its time constant replaced by a fourth time constant (3I2, C2) short with respect to the first, second and third time constants, and in the same ratio with respect to the third time constant as the second time constant with respect to the first time constant, and that it comprises switching means (20, 26) responsive to said control signal for simultaneously switching said PLL onto the first or second time constant and the second phase comparator onto, respectively, the third or fourth time constant.

2. A detection circuit for a video tape recorder signal according to claim 1, characterized in this that it further comprises:
- a detector (40) of the HF noise existing in the video signal received by the TV set during the line synchronization signals, and
- means for setting the limits defining the range of the threshold comparator (24) as a function of the noise level.

3. A detection circuit for a video tape recorder signal according to claim 2, characterized in this that it further comprises a comparator (42) for comparing the noise signal with a reference voltage and inhibiting the control signal action when the noise signal overcomes the reference threshold.

4. A detection circuit for a video tape recorder signal according to any of claims 1 to 3, characterized in this that it further comprises a hand operated switch (K1 ) for forcing the threshold comparator input (24) outside said determined range and manually causing the switching or the PLL onto the second time constant.

5. A detection circuit for a video tape recorder signal according to any of claims 1 to 4, characterized in this that it further comprises means for forcing the switching means to the second time constant during the first detection of a video signal, whereby a faster locking of the phase locked loop on the synchronization frequency is obtained.

6. A detection circuit for a video tape recorder signal according to any of claims 1 to 4, characterized in this that the control signal is transmitted to the switching means (20) through a RS flip-flop (28) and a p-frames counter (30), whereby the switching means can be operated only p frames after the end of the control signal, p being an integer comprised between 2 and 10.
